# EUROPEAN PATENT APPLICATION

(11) **EP 2 978 057 A1**
(43) Date of publication of application: **27.01.2016**
(21) Application number: 15178282.8
(22) Date of filing: 24.07.2015
(51) Int. Cl.: H01M 8/16, C08G 18/61, C08F 230/08, H01M 4/86

(54) **CATHODE FOR FUEL CELL**

(30) Priority: 24.07.2014 JP 2014150893
(71) Applicant: Toyota Jidosha Kabushiki Kaisha, Toyota-shi, Aichi-ken 471-8571 (JP)
(72) Inventor: Yoneda, Satoshi, Toyota-shi, Aichi-ken, 471-8571 (JP); Kusumegi, Takahiro, Toyota-shi, Aichi-ken, 471-8571 (JP); Yokoyama, Yasuhiro, Nagoya-shi, Aichi, 460-0006 (JP)
(74) Representative: D Young & Co LLP

(57) **Abstract**

A cathode (3A)for a fuel cell (10) includes, as a binder, a copolymer of a hydrophilic monomer and at least one of a silicone-containing monomer and a silicone-containing macromonomer.

## Description

### BACKGROUND OF THE INVENTION

### 1. Field of the Invention

The invention relates to an electrode for a fuel cell, particularly a cathode for a fuel cell.

### 2. Description of Related Art

A fuel cell, which has a configuration in which an anode and a cathode are arranged to face each other across an electrolyte membrane having ion conductivity, is known as, for example, a solid polymer-type fuel cell.

In the aforementioned fuel cell, fuel (hydrogen) is supplied to the anode and becomes a proton (H⁺) in the anode due to the action of a catalyst, and two electrons (e⁻) are released toward the cathode. The proton generated in the anode reaches the cathode through the electrolyte membrane, accepts the two electrons (e⁻) from the anode due to the action of the catalyst, and generates water together with an oxygen ion generated from oxygen supplied from the outside. The generated electricity flows outward in the form of a current that is the movement of electrons passing through an external circuit. That is, a reaction of H₂ → 2H⁺+ 2e⁻ occurs on the side of the anode, and a reaction of 2H⁺ + 1/2O₂ + 2e⁻→H₂O occurs on the side of the cathode. Therefore, a reaction of H₂ + 1/2O₂ → H₂O occurs as a whole, and as a result, power is generated. In order to make the chemical reactions proceed more effectively, a catalyst is used in the electrodes as described above. For example, in a solid polymer-type fuel cell, platinum is frequently used as a catalyst.

Generally, on the side of the cathode of the fuel cell, oxygen in the atmosphere is used by being incorporated into the cathode. Therefore, in order to efficiently use the oxygen, it is preferable that an excess of moisture is not present on a surface of the cathode, and furthermore, it is preferable to use a material having a high degree of oxygen permeability for the cathode.

Japanese Patent Application Publication No. 2010-129384 describes, as an electrode with improved drainage, a gas diffusion electrode which contains a water repellent agent composed of a fluororesin and having three-dimensionally continuous fine pores, in which fluorine desorption treatment is performed in a direction perpendicular to the surface of the gas diffusion electrode.

However, the fluororesin does not dissolve in various organic solvents contained in a slurry (generally, carbon-based slurry) for an electrode, and it is not easy to uniformly disperse the fluororesin because it has a high specific gravity. Accordingly, under the current circumstances, an excellent water repelling effect as expected is not obtained.

Incidentally, in recent years, a fact that the biological metabolism occurring in living organisms is a highly efficient energy conversion mechanism has drawn attention, and techniques for applying the mechanism to a fuel cell have been studied. The biological metabolism characterized in that energy is used with a high efficiency, and a reaction proceeds under mild conditions approximately at room temperature. However, in microorganisms or cells, in addition to a target reaction by which chemical energy is converted into electric energy, a large number of unnecessary reactions also occur, and accordingly, a sufficient energy conversion efficiency is not easily obtained. Therefore, a fuel cell (biofuel cell) has been developed which is caused to perform only an intended reaction by using an enzyme as a catalyst. In the biofuel cell, by the enzyme functioning as a catalyst, fuel is decomposed into protons and electrons. As the fuel, those using alcohols such as methanol and ethanol, monosaccharides such as glucose, or polysaccharides such as starch are used. As described above, in order to make the cathode efficiently use oxygen, it is preferable that an excess of moisture is not present on the surface of the cathode, and furthermore, it is preferable to use a material having a high degree of oxygen permeability for the cathode. However, because the cathode of the biofuel cell uses an enzyme, the cathode needs to retain the minimum amount of moisture necessary for an enzyme reaction.

Regarding the cathode of the biofuel cell, for example, Japanese Patent Application Publication No. 2013-247070 describes a method for manufacturing a cathode for a biofuel cell, including a step of generating a slurry for an electrode by mixing slurry, which is obtained by adding fine carbon particles, an enzyme, and a binder to a dispersion medium, with either a chain-like hydrocarbon-based compound, which stays in liquid form within a temperature range of 10°C to 30°C and has a vapor pressure lower than that of the dispersion medium, or a fatty acid which stays in liquid form within a temperature range of 10°C to 30°C, and a step of coating a surface of a conductive substrate forming a cathode with the slurry for an electrode.

However, in fuel cells of the related art including the biofuel cell, it is difficult to obtain sufficient oxygen permeability while maintaining sufficient hydrophilicity of the cathode.

### SUMMARY OF THE INVENTION

The invention provides a cathode for a fuel cell that has sufficient hydrophilicity and oxygen permeability.

The present inventors examined various means for solving the aforementioned problems. As a result, they found that, if a copolymer of a hydrophilic monomer and at least one of a silicone-containing monomer and a silicone-containing macromonomer is used as a binder in a cathode of a fuel cell, it is possible to provide a cathode for a fuel cell having sufficient hydrophilicity and oxygen permeability. In this way, the present inventors accomplished the invention.

An aspect of the invention relates to a cathode for a fuel cell comprising a copolymer of a hydrophilic monomer and at least one of a silicone-containing monomer and a silicone-containing macromonomer as a binder.

The silicone-containing monomer may be at least one kind selected from silicone-containing alkyl (meth)acrylate, a silicone-containing styrene derivative, and a silicone-containing fumaric acid diester. The silicone-containing monomer may be silicone-containing alkyl (meth)acrylate. The silicone-containing macromonomer may be at least one kind selected from compounds having an ethylene-type unsaturated group and a polydimethylsiloxane structure bonded to the compounds through a urethane bond. The hydrophilic monomer may be at least one kind selected from a pyrrolidone derivative having a vinyl group or a methylene group as a polymerizable group, alkyl (meth)acrylamide, hydroxyalkyl (meth)acrylate, (alkyl)aminoalkyl (meth)acrylate, and polyglycol mono(meth)acrylate. The hydrophilic monomer may be the pyrrolidone derivative having the vinyl group or the methylene group as the polymerizable group or alkyl (meth)acrylamide. The fuel may be biofuel.

According to the invention, it is possible to provide a cathode for a fuel cell having sufficient hydrophilicity and oxygen permeability.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a schematic view showing a structure of a fuel cell from a lateral surface of the fuel cell.
FIG. 1B is a view taken along the arrow b of FIG. 1A.
FIG. 2 is a view showing evaluation results of fuel cells of Examples 1 to 6 and Comparative example 1 in examples.

### DETAILED DESCRIPTION OF EMBODIMENTS

An embodiment of the invention relates to a cathode for a fuel cell in which a copolymer of a hydrophilic monomer and at least one of a silicone-containing monomer and a silicone-containing macromonomer is used as a binder.

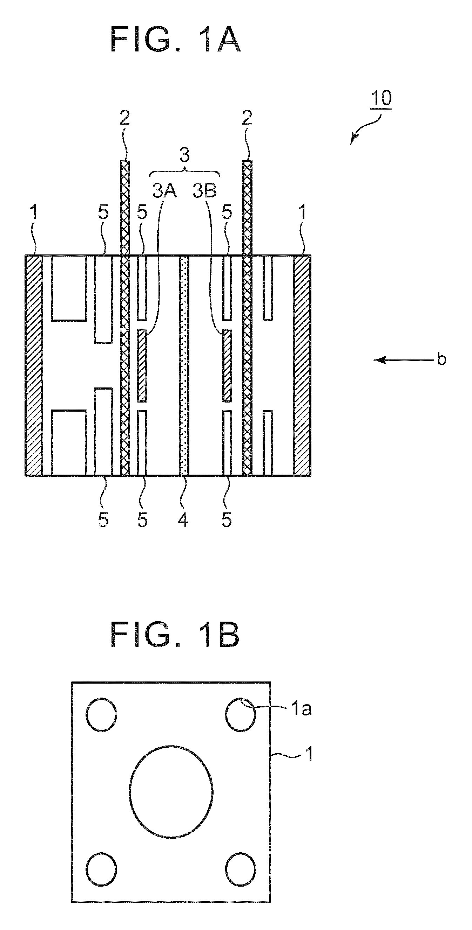

FIGS. 1A and 1B are schematic views illustrating a structure of a fuel cell including the cathode of the present embodiment. As shown in FIG. 1A, a fuel cell 10 is roughly configured with an electrolyte membrane 4 which has ion conductivity; an anode 3A and a cathode 3B which are on both sides of the electrolyte membrane 4 and each of which is sandwiched between silicone plates 5 (the anode 3A and the cathode 3B will be collectively referred to as an electrode 3); current collectors 2 each of which is positioned on the outside of each of the electrodes and composed of carbon paper or titanium mesh; and a pair of antistatic acryl plates 1 which sandwich a laminate of these members from the right and left sides. At the final stage, through bolt holes 1a shown in FIG. 1B, bolts are inserted into a space between the pair of antistatic acryl plates 1 in the laminate configured with the respective members shown in FIG. 1A and then fastened with nuts or the like, whereby the fuel cell 10 is assembled.

Generally, the electrode 3 is obtained by coating a surface of a conductive substrate (a member that becomes a skeleton of the electrode) composed of conductive carbon such as graphite, carbon black, activated carbon, carbon felt, carbon paper, or carbon cloth or coating a surface of a conductive substrate of a metal such as gold, platinum, titanium, or nickel with a material that contains carbon as a main component.

In the fuel cell of the present embodiment, as a binder of the cathode 3B, a copolymer of a hydrophilic monomer and at least one of a silicone-containing monomer and a silicone-containing macromonomer is used. That is, the copolymer of the present embodiment includes a copolymer of a silicone-containing monomer, a silicone-containing macromonomer, and a hydrophilic monomer, a copolymer of a silicone-containing monomer and a hydrophilic monomer, and a copolymer of a silicone-containing macromonomer and a hydrophilic monomer. In the present embodiment, the aforementioned copolymer is used as a binder of the cathode, and accordingly, sufficient hydrophilicity and oxygen permeability can be imparted to the cathode. Furthermore, when an enzyme having activity in an acidic environment is used in a biofuel cell, if the aforementioned copolymer, which is a crosslinked polymer having sufficient hydrohilicity and oxygen permeability, is used as a binder of a cathode, an effect of suppressing hydrolyzing properties in an acidic environment can be imparted to the cathode.

The silicone-containing monomer used in the copolymer of the invention is not particularly limited as long as it contains a silicone structure. Examples of the silicone-containing monomer include silicone-containing alkyl (meth)acrylate, a silicone-containing styrene derivative, and a silicone-containing fumaric acid diester. In the invention, "(meth)acrylate" means either or both of acrylate and methacrylate.

Examples of the silicone-containing alkyl (meth)acrylate include trimethylsiloxydimethylsilyl methyl (meth)acrylate, trimethylsiloxydimethylsilyl propyl (meth)acrylate, methyl bis(trimethylsiloxy)silyl propyl (meth)acrylate, tris(trimethylsiloxy)silyl propyl (meth)acrylate, mono [methylbis(trimethylsiloxy)siloxy]bis(trimethylsiloxy)silyl propyl (meth)acrylate, tris[methylbis(trimethylsiloxy)siloxy]silyl propyl (meth)acrylate, methyl bis(trimethylsiloxy)silyl propylglyceryl (meth)acrylate, tris(trimethylsiloxy)silyl propylglyceryl (meth)acrylate, mono[methylbis(trimethylsiloxy)siloxy]bis(trimethylsiloxy)silyl propylglyceryl (meth)acrylate, trimethylsilylethyl tetramethyl disiloxypropylglyceryl (meth)acrylate, trimethylsilyl methyl (meth)acrylate, trimethylsilyl propyl (meth)acrylate, trimethylsilyl propylglyceryl (meth)acrylate, trimethylsiloxydimethyl silylpropylglyceryl (meth)acrylate, methyl bis(trimethylsiloxy)silylethyl tetramethyldisiloxymethyl (meth)acrylate, tetramethyltriisopropyl cyclotetrasiloxanylpropyl (meth)acrylate, and tetramethyltriisopropyl cyclotetrasiloxybis(trimethylsiloxy)silyl propyl (meth)acrylate. From the view point of polymerization properties and oxygen permeability, trimethylsiloxydimethylsilyl methyl (meth)acrylate, trimethylsiloxydimethylsilyl propyl (meth)acrylate, methyl bis(trimethylsiloxy)silyl propyl (meth)acrylate, and tris(trimethylsiloxy)silyl propyl (meth)acrylate are preferable, and tris(trimethylsiloxy)silyl propyl (meth)acrylate is particularly preferable.

Examples of the silicone-containing styrene derivative include a compound represented by Formula (1). 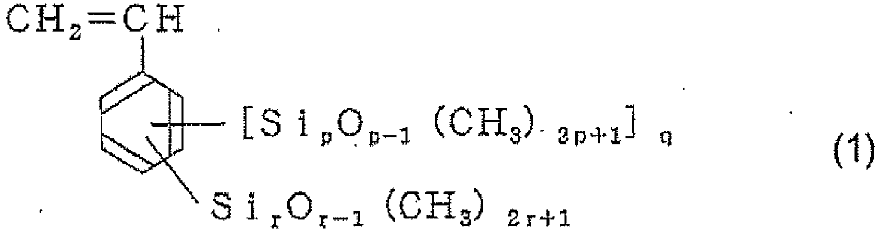 (In the formula, p represents an integer of 1 to 15; q represents 0 or 1; and r represents an integer of 1 to 15.)

The silicone-containing styrene derivative represented by Formula (1) is easily purified and synthesized when p, q, and r are within the aforementioned range.

Examples of the silicone-containing styrene derivative represented by Formula (1) include tris(trimethylsiloxy)silyl styrene, bis(trimethylsiloxy)methylsilyl styrene, (trimethylsiloxy)dimethylsilyl styrene, tris(trimethylsiloxy)siloxydimethylsilyl styrene, [bis(trimethylsiloxy)methylsiloxy] dimethylsilyl styrene, (trimethylsiloxy)dimethylsilyl styrene, heptamethyl trisiloxanyl styrene, nonamethyl tetrasiloxanyl styrene, pentadecamethyl heptasiloxanyl styrene, heneicosamethyl decasiloxanyl styrene, heptacosamethyl tridecasiloxanyl styrene, hentriacontamethyl pentadecasiloxanyl styrene, trimethylsiloxypentamethyl disiloxymethylsilyl styrene, tris(pentamethyldisiloxane)silyl styrene, tris(trimethylsiloxy)siloxybis(trimethylsiloxy)silyl styrene, bis(heptamethyltrisiloxy)methylsilyl styrene, tris[methylbis(trimethylsiloxy)siloxy]silyl styrene, trimethylsiloxybis[tris(trimethylsiloxy)siloxy]silyl styrene, heptakis(trimethylsiloxy)trisilyl styrene, nonamethyltetrasiloxyundecyl methylpentasiloxymethylsilyl styrene, tris[tris(trimethylsiloxy)siloxy]silyl styrene, (tristrimethylsiloxyhexamethyl)tetrasiloxy[tris(trimethylsiloxy)siloxy]trimethylsiloxysilyl styrene, nonakis(trimethylsiloxy)tetrasilyl styrene, bis(tridecamethylhexasiloxy)methylsilyl styrene, heptamethylcyclotetrasiloxanyl styrene, heptamethylcyclotetrasiloxybis(trimethylsiloxy)silyl styrene, tripropyltetramethyl cyclotetrasiloxanyl styrene, and trimethylsilyl styrene. From the viewpoint of polymerization properties and oxygen permeability, tris(trimethylsiloxy)silyl styrene, bis(trimethylsiloxy)methylsilyl styrene, (trimethylsiloxy)dimethylsilyl styrene, and tris(trimethylsiloxy)siloxydimethylsilyl styrene are preferable.

Examples of the silicone-containing fumaric acid diester include a compound represented by Formula (2). 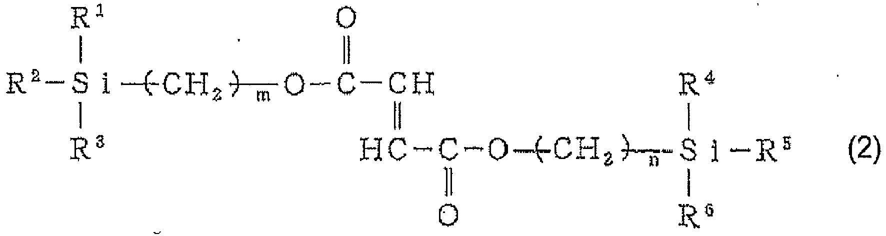 (In the formula, each of R¹, R², R³, R⁴, R⁵, and R⁶ independently represents a methyl group or a trimethylsiloxy group represented by the following formula; and each of m and n independently represents an integer of 1 to 3).

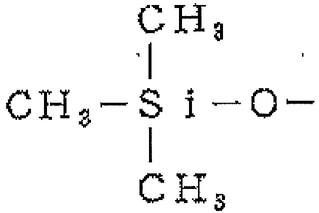

Examples of the compound represented by Formula (2) include bis(3-(trimethylsilyl)propyl)fumarate, bis(3-(pentamethyldisiloxanyl)propyl)fumarate, bis(3-(1,3,3,3-tetramethyl-1-(trimethylsilyloxy)disiloxanyl)propyl)fumarate, and bis(tris(trimethylsiloxy)silylpropyl)fumarate. From the viewpoint of polymerization properties and oxygen permeability, bis(3-(trimethylsilyl)propyl)fumarate and bis(tris(trimethylsiloxy)silylpropyl)fumarate are preferable.

From the viewpoint of copolymerization properties with respect to the following silicone-containing macromonomer and hydrophilic monomer, as the silicone-containing monomer, silicone-containing alkyl (meth)acrylate is preferable.

The content of the silicone-containing monomer in all the polymerizable components can be appropriately selected according to the monomer used. For example, when silicone-containing alkyl (meth)acrylate is used, from the viewpoint of physical properties of the copolymer to be obtained, the content of the silicone-containing alkyl (meth)acrylate is preferably 3% by weight to 65 by weight and more preferably 5 % by weight to 60% by weight, with respect to all the polymerizable components. When a silicone-containing styrene derivative is used, from the viewpoint of oxygen permeability and mechanical strength of the copolymer to be obtained, the content of the silicone-containing styrene derivative is preferably 1% by weight to 30% by weight and more preferably 3% by weight to 20% by weight, with respect to all the polymerizable components. When a silicone-containing fumaric acid diester is used, from the viewpoint of oxygen permeability and mechanical strength of the copolymer to be obtained, the content of the silicone-containing fumaric acid diester is preferably 1% by weight to 50% by weight with respect to all the polymerizable components.

The silicone-containing macromonomer used in the copolymer of the invention is not particularly limited as long as it is a macromonomer having a silicone structure. The silicone-containing macromonomer is preferably a compound having an ethylene-type unsaturated group and a polydimethylsiloxane structure bonded to the compound through a urethane bond. The silicone-containing macromonomer has a silicone chain in a molecular chain thereof and can impart a high degree of oxygen permeability to a cathode for a fuel cell. In the invention, a macromonomer refers to a reactive compound which has a polymerizable carbon-carbon unsaturated bond (ethylene-type unsaturated group) ,i.e., carbon-to-carbon double bond on a terminal of a molecular chain thereof and has a number average molecular weight (Mn) of 1,000 to 500,000 in general.

For example, the silicone-containing macromonomer is a monomer represented by Formula (I).

A¹-U¹-S¹-U²-A² (I)

(In the formula, A¹ is a group represented by Formula (II): Y²¹-R³¹-; A² is a group represented by Formula (III): -R³⁴-Y²²; U¹ is a group represented by Formula (IV): -X²¹-E²¹-X²⁵-R³²-; S¹ is a group represented by Formula (V); and U² is a group represented by Formula (VI): -R³³-X²⁶-E²²-X²²-.)

Y²¹-R³¹- (II)

(In the formula, Y²¹ represents an acryloyloxy group, a methacryloyloxy group, a vinyl group, or an allyl group, and R³¹ represents an alkylene group with a straight chain or a branched chain having 2 to 6 carbon atoms.)

-R³⁴-Y²² (III)

(In the formula, Y²² represents an acryloyloxy group, a methacryloyloxy group, a vinyl group, or an allyl group, and R³⁴ represents an alkylene group with a straight chain or a branched chain having 2 to 6 carbon atoms.)

-X²¹-E²¹-X²⁵-R³²- (IV)

(In the formula, X²¹ represents a covalent bond, an oxygen atom, or an alkylene glycol group having 1 to 6 carbon atoms; E²¹ represents a -CONH- group (in this case, X²¹ represents a covalent bond, and E²¹ forms a urethane bond together with X²⁵) or a divalent group derived from diisocyanate selected from the group consisting of saturated or unsaturated aliphatic diisocyanate, alicyclic diisocyanate, and aromatic diisocyanate (in this case, X²¹ represents an oxygen atom or an alkylene glycol group having 1 to 6 carbon atoms, and E²¹ forms a urethane bond between X²¹ and X²⁵); X²⁵ represents an oxygen atom or an alkylene glycol group having 1 to 6 carbon atoms; and R³² represents an alkylene group with a straight chain or a branched chain having 1 to 6 carbon atoms.) 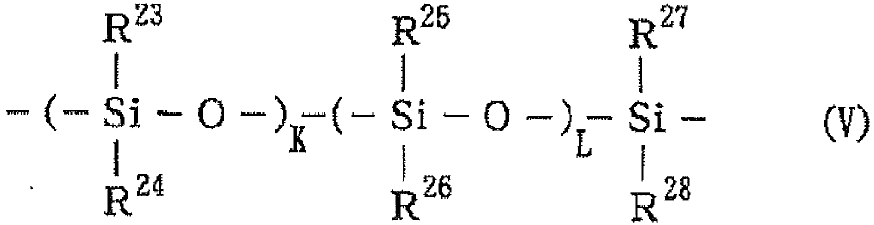 (In the formula, each of R²³, R²⁴, R²⁵, R²⁶, R²⁷, and R²⁸ independently represents an alkyl group having 1 to 6 carbon atoms, an alkyl group substituted with fluorine, or a phenyl group; K represents an integer of 1 to 50; and L represents an integer of 0 to an integer that is equal to (50 - K).)

-R³³-X²⁶-E²²-X²²- (VI)

(In the formula, R³³ represents an alkylene group with a straight chain or a branched chain having 1 to 6 carbon atoms; X²² represents a covalent bond or an alkylene glycol group having 1 to 6 carbon atoms; X²⁶ represents an oxygen atom or an alkylene glycol group having 1 to 6 carbon atoms; and E²² represents a -CONH- group (in this case, X²² represents a covalent bond, and E²² forms a urethane bond together with X²⁶) or a divalent group derived from diisocyanate selected from the group consisting of saturated or unsaturated aliphatic diisocyanate, alicyclic diisocyanate, and aromatic diisocyanate (in this case, X²² represents an oxygen atom or an alkylene glycol group having 1 to 6 carbon atoms, and E²² forms a urethane bond between X²² and X²⁶).)

In Formula (I), as described above, A¹ is a group represented by Formula (II): Y²¹-R³¹- (in the formula, Y²¹ and R³¹ have the same definition as above), and A² is a group represented by Formula (III): -R³⁴-Y²² (in the formula, Y²² and R³⁴ have the same definition as above).

Both the Y²¹ and Y²² are polymerizable groups. However, as Y²¹ and Y²², an acryloyloxy group, a methacryloyloxy group, and a vinyl group are particularly preferable because these groups can be easily copolymerized with the following hydrophilic monomer.

Both the R³¹ and R³⁴ are alkylene groups with a straight chain or a branched chain having 2 to 6 carbon atoms. As R³¹ and R³⁴, an ethylene group, a propylene group, and a butylene group are preferable.

Both the U¹ and U² represent a group having a urethane bond in a molecular chain of the aforementioned macromonomer.

In U¹ and U², as described above, each of E²¹ and E²² represents a -CONH- group or a divalent group derived from diisocyanate selected from the group consisting of saturated or unsaturated aliphatic diisocyanate, alicyclic diisocyanate, and aromatic diisocyanate. Examples of the divalent group derived from diisocyanate selected from the group consisting of saturated or unsaturated aliphatic diisocyanate, alicyclic diisocyanate, and aromatic diisocyanate include a divalent group derived from saturated aliphatic diisocyanate such as ethylene diisocyanate, 1,3-diisocyanate propane, and hexamethylene diisocyanate; a divalent derived from alicyclic diisocyanate such as 1,2-diisocyanate cyclohexane, bis(4-isocyanatecyclohexyl)methane, and isophorone diisocyanate; a divalent group derived from aromatic diisocyanate such as tolylene diisocyanate and 1,5-diisocyanate naphthalene; and a divalent group derived from unsaturated aliphatic diisocyanate such as 2,2'-diisocyanate diethyl fumarate. Among these, a divalent group derived from heacmethylene diisocyanate, a divalent group derived from tolylene diisocyanate, and a divalent group derived from isophorone diisocyanate are preferable, since these are relatively easily available and can easily impart strength to the copolymer.

When E²¹ in U¹ represents a -CONH- group, X²¹ represents a covalent bond, and E²¹ forms a urethane bond represented by Formula: -OCO-NH- together with X²⁵. Furthermore, when E²¹ represents a divalent group derived from the aforementioned diisocyanate, X²¹ represents an oxygen atom or an alkylene glycol group having 1 to 6 carbon atoms, and E²¹ forms a urethane bond between X²¹ and X²⁵. X²⁵ represents an oxygen atom or an alkylene glycol group having 1 to 6 carbon atoms, and R³² represents an alkylene group with a straight chain or a branched chain having 1 to 6 carbon atoms.

In U², R³³ represents an alkylene group with a straight chain or a branched chain having 1 to 6 carbon atoms, and X²⁶ represents an oxygen atom or an alkylene glycol group having 1 to 6 carbon atoms. When E²² represents a -CONH- group, X²² represents a covalent bond, and E²² forms a urethane bond represented by Formula: -OCO-NH-together with X²⁶. Furthermore, when E²² represents a divalent group derived from the aforementioned diisocyanate, X²² represents an oxygen atom or an alkylene glycol group having 1 to 6 carbon atoms, and E²² forms a urethane bond between X²² and X²⁶.

Examples of the alkylene glycol having 1 to 6 carbon atoms represented by each of X²¹, X²⁵, X²², and X²⁶ include a group represented by Formula (VII): -O-(CₓH₂ₓ-O)_{y}- (in the formula, x represents an integer of 1 to 4, and y represents an integer of 1 to 5). In the present embodiment, from the viewpoint of excellent oxygen permeability and mechanical strength of the copolymer to be obtained, y in Formula (VII) is preferably an integer of 1 to 5 and particularly preferably an integer of 1 to 3.

As described above, S¹ is a group represented by Formula (V). As described above, each of R²³, R²⁴, R²⁵, R²⁶, R²⁷, and R²⁸ in Formula (V) independently represents an alkyl group having 1 to 6 carbon atoms, an alkyl group substituted with fluorine, or a phenyl group.

Specific examples of the alkyl group substituted with fluorine include a trifluoro-n-propyl group, a trifluoroisopropyl group, a trifluoro-n-butyl group, a trifluoroisobutyl group, a trifluoro-sec-butyl group, a trifluoro-tert-butyl group, a trifluoro-n-pentyl group, a trifluoroisopentyl group, a trifluoroneopentyl group, and a trifluorohexyl group.

K represents an integer of 1 to 50, and L represents an integer of 0 to an integer that is equal to (50 - K). When K + L is equal to a value that is equal to or less than 50, compatibility with the following hydrophilic monomer can be maintained. Furthermore, when K + L is equal to a value that is greater than 0, the oxygen permeability of the copolymer to be obtained becomes excellent. K + L is preferably equal to an integer of 2 to 40, and more preferably equal to an integer of 3 to 30.

Preferable examples of the silicone-containing macromonomer used in the present invention include a compound represented by Formula (A-1) and a compound represented by Formula (A-2).

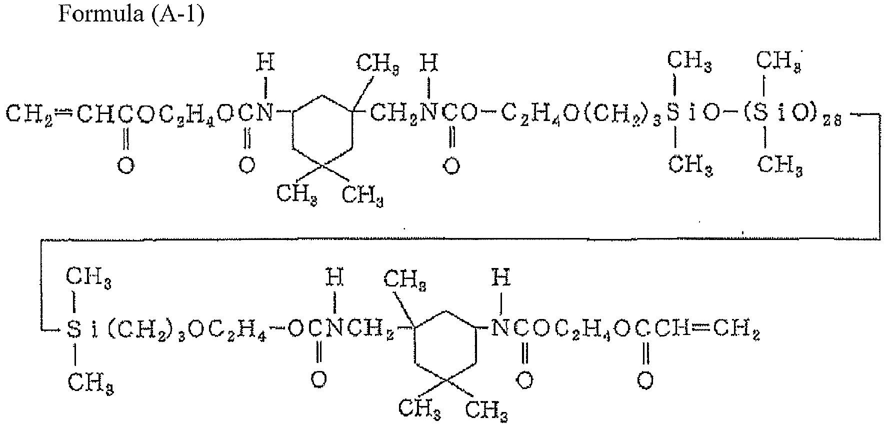

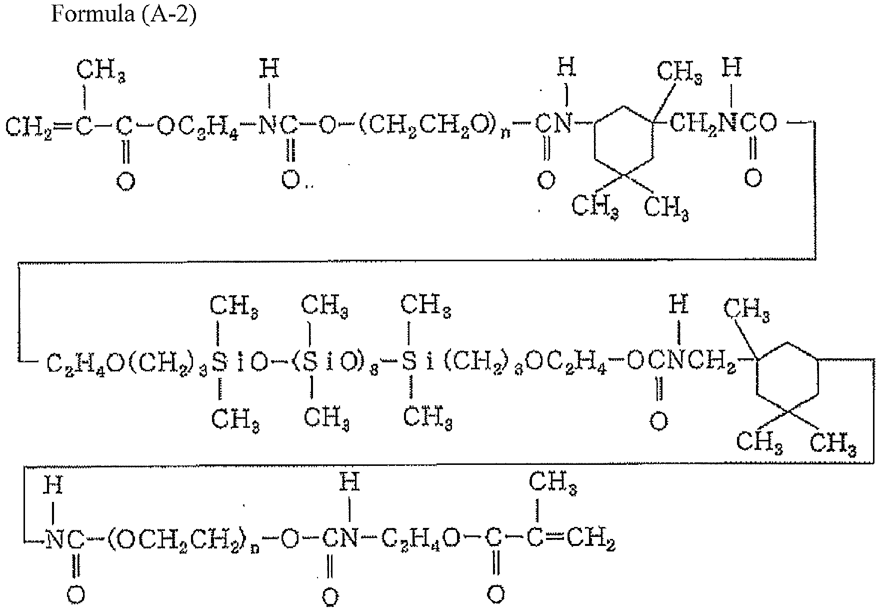

From the viewpoint of physical properties and oxygen permeability of the copolymer to be obtained, the content of the silicone-containing macronomomer in all the polymerizable components is preferably 1% by weight to 40% by weight, and more preferably 1% by weight to 30% by weight.

The hydrophilic monomer used in the copolymer of the present embodiment is not particularly limited, and examples thereof include a pyrrolidone derivative having a vinyl group as a polymerizable group, a pyrrolidone derivative having a methylene group as a polymerizable group, alkyl (meth)acrylamide, hydroxyalkyl (meth)acrylate, (alkyl)aminoalkyl (meth)acrylate, polyglycol mono(meth)acrylate, carboxylic acids, N-vinyl piperidones, N-vinyl lactams, and N-vinyl amides. It is also possible to use two or more kinds of the hydrophilic monomer.

The pyrrolidone derivative having a vinyl group as a polymerizable group is not particularly limited, and examples thereof include N-vinyl pyrrolidone substituted with an alkyl group, such as N-viinyl-3-methyl-2-pyrrolidone, N-vinyl-4-methyl-2-pyrrolidone, N-vinyl-5-methyl-2-pyrrolidone, N-vinyl-6-methyl-2-pyrrolidone, N-vinyl-3-ethyl-2-pyrrolidone, N-vinyl-4,5-dimethyl-2-pyrrolidone, N-vinyl-5,5-dimethyl-2-pyrrolidone, and N-vinyl-3,3,5-trimethyl-2-pyrrolidone. Among these, N-vinyl-2-pyrrolidone is particularly preferable.

The pyrrolidone derivative having a methylene group as a polymerizable group is not particularly limited, and examples thereof include alkyl group-substituted pyrrolidone having a methylene group, such as 1-methyl-3-methylene-2-pyrrolidone, 1-ethyl-3-methylene-2-pyrrolidone, 1-methyl-5-methylene-2-pyrrolidone, 1-ethyl-5-methylene-2-pyrrolidone, 5-methyl-3-methylene-2-pyrrolidone, 5-ethyl-3-methylene-2-pyrrolidone, 1-n-propyl-3-methylene-2-pyrrolidone, 1-n-propyl-5-methylene-2-pyrrolidone, 1-isopropyl-3-methylene-2-pyrrolidone, 1-isopropyl-5-methylene-2-pyrrolidone, 1-n-butyl-3-methylene-2-pyrrolidone, and 1-t-butyl-3-methylene-2-pyrrolidone. From the viewpoint of polymerization properties and hydrophilicity, 1-methyl-3-methylene-2-pyrrolidone and 1-ethyl-3-methylene-2-pyrrolidone are preferable, and 1-methyl-3-methylene-2-pyrrolidone is particularly preferable.

The alkyl (meth)acrylamide is not particularly limited, and examples thereof include N,N-dialkyl (meth)acrylamide, N,N-dimethyl (meth)acrylamide, N-methyl (meth)acrylamide, N-ethyl (meth)acrylamide, and N,N-diethyl (meth)acrylamide. Among these, N,N-dimethyl (meth)acrylamide is preferable.

The hydroxyalkyl (meth)acrylate is not particularly limited, and examples thereof include hydroxymethyl (meth)acrylate, 2-hydroxyethyl (meth)acrylate, hydroxybutyl (meth)acrylate, hydroxypropyl (meth)acrylate, and 2,3-dihydroxypropyl (meth)acrylate.

The (alkyl)aminoallkyl (meth)acrylate is not particularly limited, and examples thereof include 2-dimethylaminoethyl (meth)acrylate and 2-butylaminoethyl (meth)acrylate.

The polyglycol mono(meth)acrylate is not particularly limited, and examples thereof include polyethylene glycol mono(meth)acrylate and polypropylene glycol mono(meth)acrylate.

The carboxylic acids are not particularly limited, and examples thereof include (meth)acrylic acid, itaconic acid, crotonic acid, and vinyl benzoate.

The N-vinyl piperidones are not particularly limited, and examples thereof include N-vinyl-2-piperidone, N-vinyl-3-methyl-2-piperidone, N-vinyl-4-methyl-2-piperidone, N-vinyl-5-methyl-2-piperidone, N-vinyl-6-methyl-2-piperidone, N-vinyl-6-ethyl-2-piperidone, N-vinyl-3,5-dimethyl-2-piperidone, and N-vinyl-4,4-dimethyl-2-piperidone.

The N-vinyl lactams are not particularly limited, and examples thereof include N-vinyl-2-caprolactam, N-vinyl-3-methyl-2-caprolactam, N-vinyl-4-methyl-2-caprolactam, N-vinyl-7-methyl-2-caprolactam, N-vinyl-7-ethyl-2-caprolactam, N-vinyl-3,5-dimethyl-2-caprolactam, N-vinyl-4,6-dimethyl-2-caprolactam, and N-vinyl-3,5,7-trimethyl-2-caprolactam.

The N-vinyl amides are not particularly limited, and examples thereof include N-vinyl formamide, N-vinyl-N-methyl formamide, N-vinyl-N-ethyl formamide, N-vinyl acetamide, N-vinyl-N-methyl acetamide, and N-vinyl-N-ethyl acetamide.

As the hydrophilic monomer, it is possible to use other hydrophilic monomers such as aminostyrene, hydroxystyrene, vinyl acetate, glycidyl acrylate, allyl glycidyl ether, vinyl propionate, N-vinyl imidazole, N-vinyl piperidine, N-vinyl succinimide, N-vinyl phthalimide, N-(meth)acryloyl piperidine, and N-(meth)acryloyl morpholine.

From the viewpoint of mechanical strength and hydrophilicity of the copolymer to be obtained, as the hydrophilic monomer, a pyrrolidone derivative having a methylene group or a vinyl group as a polymerizable group, alkyl (meth)acrylamide, hydroxyalkyl (meth)acrylate, (alkyl)aminoalkyl (meth)acrylate, and polyglycol mono(meth)acrylate are preferable. From the viewpoint of compatibility with the aforementioned silicone-containing monomer or the silicone-containing macromonomer, a pyrrolidone derivative having a methylene group or a vinyl group as a polymerizable group and alkyl (meth)acrylamide are particularly preferable.

The content of the hydrophilic monomer in all the polymerizable components is not particularly limited. For example, the content of the hydrophilic monomer is 20% by weight to 95% by weight and preferably 30% by weight to 90% by weight, with respect to all the polymerizable components.

If necessary, a monomer other than the aforementioned silicone-containing monomer, silicone-containing macromonomer, and hydrophilic monomer may be used as the polymerizable component of the present embodiment.

In all the polymerizable components of the present embodiment, a weight ratio of silicone-containing macromonomer:silicone-containing monomer:hydrophilic monomer is 1 to 10:1 to 20:1 to 25 for example. From the viewpoint of oxygen permeability and hydrophilicity, the weight ratio is preferably 1 to 5:1 to 10:1 to 20. When the silicone-containing monomer and the hydrophilic monomer are used, a weight ratio of silicone-containing monomer:hydrophilic monomer is 1:0.5 to 1:10. From the viewpoint of oxygen permeability and hydrophilicity, the silicone-containing monomer and the hydrophilic monomer are used at a weight ratio of 1:1 to 1:5. When the silicone-containing macromonomer and the hydrophilic monomer are used, a weight ratio of silicone-containing macromonomer:hydrophilic monomer is 1:2 to 1:25. From the viewpoint of oxygen permeability and hydrophilicity, the silicone-containing macronomomer and the hydrophilic monomer are used at a weight ratio of 1:5 to 1:10.

The copolymer of the present embodiment is obtained by polymerizing the hydrophilic monomer and at least one of the silicone-containing monomer and the silicone-containing macromonomer.

The polymerization of the aforementioned monomers can be performed according to a general method. For example, the polymerization can be performed in a manner in which a radical polymerization initiator is added to a liquid mixture of the hydrophilic monomer and at least one of the silicone-containing monomer and the silicone-containing macromonomer, and then the resultant is slowly heated within a temperature range of room temperature to a temperature of approximately 120°C or irradiated with electromagnetic waves such as microwaves, ultraviolet rays, and radiation (y rays). When the polymerization is performed by heating, the temperature may be increased stepwise. The polymerization may be performed by a general method such as a radical polymerization method or a solution polymerization method using a solvent or the like.

Specific examples of the radical polymerization initiator include azobisisobutyronitrile, 2,2'-azobis(2,4-dimethylvaleronitrile), benzoyl peroxide, tert-butyl hydroperoxide, and cumene hydroperoxide. One kind of these radical polymerization intiators can be used alone, or two or more kinds thereof can be used concurrently. The radical initiator is used generally in an amount of 0.001 parts by weight to 1 part by weight with respect to 100 parts by weight of the liquid mixture of monomers. When the monomers are polymerized by using light rays, it is preferable to additionally add a photopolymerization initiator or a sensitizer to the liquid mixture. It is appropriate for the polymerization initiator or the sensitizer to be mixed in an amount of about 0.001 parts by weight to 2 parts by weight and preferably 0.01 parts by weight to 1 part by weight, with respect to a total of 100 parts by weight of the components to be copolymerized.

When the polymerization is performed by the solution polymerization method, a solvent improving uniformity of the polymerizable components is preferable as the solvent. Examples of such a solvent include an alcohol having 1 to 4 carbon atoms, such as methanol, ethanol, 1-propanol, or 2-propanol, acetone, methyl ethyl ketone, dimethylformamide, dimethylsulfoxide, acetonitrile, N-methyl-2-pyrrolidone, and n-hexane. One kind of the solvent may be used alone, or two or more kinds thereof may be used by being mixed together. In the present embodiment, the amount of the solvent used in the aforementioned liquid mixture is generally less than 100% by weight.

In the present embodiment, the cathode for a fuel cell may be obtained by using the copolymer polymerized by the aforementioned method for a cathode. However, it is preferable that the cathode for a fuel cell is obtained in a manner in which the aforementioned monomers and radical polymerization initiator are added to a slurry for a cathode that is for manufacturing a cathode, the slurry is applied (by means of coating, spraying, or dipping) onto a surface of the aforementioned conductive substrate, and the aforementioned monomers are polymerized.

More specifically, first, a material, which contains carbon as a main component, and the aforementioned monomers are mixed with a volatile organic solvent as a dispersion medium; a radical polymerization initiator is added to the liquid mixture; the resultant is dispersed to prepare slurry for a cathode; and the prepared slurry is applied onto a surface of a conductive substrate and polymerized, thereby manufacturing a cathode in which the aforementioned copolymer is used as a binder.

The volatile organic solvent is not particularly limited, and examples thereof include ethanol, 2-propanol, acetone, N-methyl pyrrolidone, hexane, and pentane. Two or more kinds of these solvents may be used in combination.

The conductive material, of which the surface has been coated with the slurry for a cathode, is formed into an electrode through the polymerization of the aforementioned monomers. The polymerization can be performed for 30 minutes to 60 minutes under a condition of a temperature of 80°C to 100°C. Herein, the anode 3A can also be manufactured by the same method as the cathode 3B.

The present embodiment also includes a fuel cell including the aforementioned cathode. The fuel cell of the present embodiment preferably uses biofuel as fuel. When the fuel cell of the present embodiment is a biofuel cell, the fuel cell may contain an enzyme as a catalyst. The enzyme may be used by causing a solution containing the enzyme to present on the side of the cathode of the fuel cell. Alternatively, the enzyme may be used by being dispersed in and fixed to the surface of the conductive substrate of an electrode.

The enzyme that can be used in the fuel cell of the present embodiment is not particularly limited, and examples thereof include an oxidoreductase such as dehydrogenase or oxidase. Specific examples of the oxidoreductase include glucose dehydrogenase (GDH), fructose dehydrogenase (FDH), bilirubin oxidase (BOD), alcohol dehydrogenase (ADH), alcohol oxidase (AOD), aldehyde oxidase, aldehyde dehydrogenase, glucose oxidase (GOD), formic acid dehydrogenase, formic acid oxidase, diaphorase, and multicopper oxidase. Two or more kinds of these enzymes may be used in combination.

For example, in the biofuel cell of the present embodiment, alcohols such as methanol and ethanol, aldehydes such as acetaldehyde, carboxylic acids such as formic acid and acetic acid, or saccharides such as glucose and fructose can be used as fuel.

Hereinafter, the invention will be specifically described based on examples, but the invention is not particularly limited to the examples.

(Example 1) As a silicone-containing monomer, tris(trimethylsiloxy)silylpropyl methacrylate was used; as a silicone-containing macromonomer, a compound represented by Formula (A-1) was used; and as a hydrophilic monomer, N-vinyl-2-pyrrolidone (N-VP) was used.

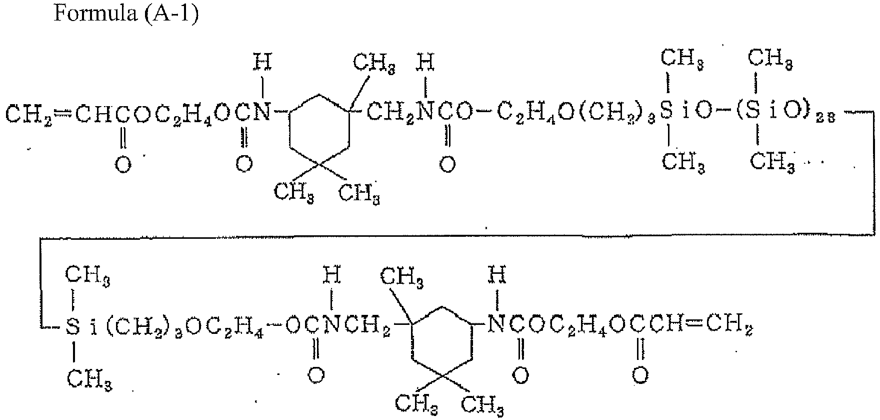

The compound represented by Formula (A-1) was synthesized by the following method. 75.48 g (0.34 mol) of isophorone diisocyanate (IPDI) and 0.12 g of ferric acetylacetonate (FeAA) were put into a 1 L three-neck flask that had undergone nitrogen purging in advance and was equipped with a Dimroth condenser tube as a side tube, a mechanical stirrer, and a thermometer. Thereafter, 529.90 g of dimethyl siloxane having a hydroxy group on both terminals (a polymerization degree of 40, a hydroxyl group equivalent of 1,560 g/mol, KF-6002 manufactured by Shin-Etsu Chemical Co., Ltd., hereinafter, referred to as DHDMS i40) was put into the flask, and the resultant was stirred for about 4 hours in an oil bath heated to 80°C.

Subsequently, 39.47 g (0.34 mol) of 2-hydroxyethyl acrylate (HEA) and 0.20 g of p-methoxyphenol (MEHQ) as a polymerization inhibitor were put into the three-neck flask, and the resultant was stirred in the oil bath with a temperature of 80°C. After about 3 hours, from the reaction solution, the results of the reaction were checked by using ¹H-NMR and FT/IR. As a result, it was confirmed that an intended compound was obtained.

Furthermore, the crude compound was extracted and washed by using n-hexane and acetonitrile, the n-hexane layer was recovered, and an organic solvent and a low-molecular weight compound were removed by distillation under reduced pressure. In this way, 522.33 g (yield of 81%) of a purified compound was obtained.

¹H-NMR (inCDCl3); δ 0.06 ppm (Si-CH₃, m), 0.52 (Si-CH₂, 2H, m), 2.91 (NH -CH₂, 2H, d), 3.02 (CH₂-N=C=O, 2H, s), 3.42 (-O-CH₂, 2H, t), 3.61 (-O-CH₂, 2H, m), 4.18 - 4.34 (-(O)CO-CH₂, 6H, m), 4.54 (NH, 1H, s), 4.85 (NH, 1H, s), 5.84 (CH=, 1H, dd), 6.14 (CH=, 1H, dd), 6.43 (CH=, 1H, dd): FT/IR; 1,262 and 802 cm⁻¹ (Si-CH³), 1,094 and 1,023 (Si-O-Si), 1,632 (C=C), around 1,728 (C=O, ester and urethane)

### 1-1. Preparation of anode electrode

A dispersion solution, which was obtained by weighing carbon black, 10% polyvinyl pyridine, and N-methyl pyrrolidone and mixing these together, was applied to carbon felt cut out in 1 cm², and then the carbon felt was dried. The resultant obtained in this way was used as an anode electrode.

### 1-2. Preparation of cathode

### 1-2-1. Preparation of cathode slurry

420 mg of carbon black, 0.14 mL of a liquid mixture of monomers, which was obtained by mixing the compound represented by Formula (A-1):tris(trimethylsiloxy)silylpropyl methacrylate:N-vinyl-2-pyrrolidone together at a weight ratio of 1:7:12, and 3 mL of 2-propanol were thoroughly stirred. Thereafter, 0.14mL of a 3.0% 2,2'-azobis(2,4-dimethylvaleronitrile) solution as a polymerization initiator was added to and dispersed in the mixture obtained as above.

### 1-2-2. Preparation of cathode

The slurry obtained in the section 1-2-1 was applied onto a surface of carbon paper and polymerized for 30 minutes at 90°C, thereby polymerizing the aforementioned monomers.

### 1-3. Preparation of BO-3

Bilirubin Oxidase Amano 3 (BO-3) (manufactured by Amano Enzyme Inc.) was dissolved in pure water, thereby preparing a 200mg/mL BO-3 solution.

### 1-4. Preparation of fuel cell

A fuel cell configured as shown in FIG. 1 was prepared.

### 1-5. Evaluation of fuel cell

By using the fuel cell prepared in the section 1-4, cell performance evaluation was performed. As fuel of the side of the anode, a 0.15 M aqueous ascorbic acid solution was used, and for the side of the cathode, the 200mg/mL BO-3 solution and a 50 mM potassium ferricyanide solution were used.

The power of the fuel cell was measured by using ELECTRONIC Load PLZ164WA (manufactured by Kikusui Electronics Corpation) as an external load apparatus and WAVY FOR PLZ-4W software (manufactured by Kikusui Electronics Corpation) that were connected to each other in series between both the electrodes of the fuel cell. The measurement was performed under two conditions including an air condition and a 100% oxygen condition.

(Example 2) A fuel cell was prepared in the same manner as in Example 1, except that instead of the liquid mixture of monomers containing the compound represented by Formula (A-1), tris(trimethylsiloxy)silylpropyl methacrylate, and N-vinyl-2-pyrrolidone, a liquid mixture of monomers was used which was obtained by mixing the compound represented by (A-1):tris(trimethylsiloxy)silylpropyl methacrylate:N,N-dimethyl acrylamide (DMAA) together at a weight ratio of 1:7:12.

(Example 3) A fuel cell was prepared in the same manner as in Example 1, except that instead of the liquid mixture of monomers containing the compound represented by Formula (A-1), tris(trimethylsiloxy)silylpropyl methacrylate, and N-vinyl-2-pyrrolidone, a liquid mixture of monomers was used which was obtained by mixing tris(trimethylsiloxy)silylpropyl methacrylate:N-vinyl-2-pyrrolidone together at a weight ratio of 8:12.

(Example 4) A fuel cell was prepared in the same manner as in Example 1, except that instead of the liquid mixture of monomers containing the compound represented by Formula (A-1), tris(trimethylsiloxy)silylpropyl methacrylate, and N-vinyl-2-pyrrolidone, a liquid mixture of monomers was used which was obtained by mixing tris(trimethylsiloxy)silylpropyl methacrylate:N,N-dimethyl acrylamide together at a weight ratio of 8:12.

(Example 5) A fuel cell was prepared in the same manner as in Example 1, except that instead of the liquid mixture of monomers containing the compound represented by Formula (A-1), tris(trimethylsiloxy)silylpropyl methacrylate, and N-vinyl-2-pyrrolidone, a liquid mixture of monomers was used which was obtained by mixing the compound represented by Formula (A-1):N-vinyl-2-pyrrolidone together at a weight ratio of 1:6.

(Example 6) A fuel cell was prepared in the same manner as in Example 1, except that instead of the liquid mixture of monomers containing the compound represented by Formula (A-1), tris(trimethylsiloxy)silylpropyl methacrylate, and N-vinyl-2-pyrrolidone, a liquid mixture of monomers was used which was obtained by mixing the compound represented by Formula (A-1):tris(trimethylsiloxy)silylpropyl methacrylate:1-methyl-3-methylene-2-pyrrolidone (N-MMP) together at a weight ratio of 1:7:12.

Table 1 shows the composition of each of the liquid mixtures of monomers used in Examples 1 to 6.

**[Table 1]**

| | Composition | Weight ratio |
|---|---|---|
| Example 1 | Silicone-containing macromonomer: silicone-containing monomer:N-VP | 1:7:12 |
| Example 2 | Silicone-containing macromonomer:silicone-containing monomer:DMAA | 1:7:12 |
| Example 3 | Silicone-containing monomer:N-VP | 8:12 |
| Example 4 | Silicone-containing monomer:DMAA | 8:12 |
| Example 5 | Silicone-containing macromonomer:N-VP | 1:6 |
| Example 6 | Silicone-containing macromonomer:silicone-containing monomer:N-MMP | 1:7:12 |

(Comparative example 1) A fuel cell was prepared and evaluated in the same manner as in Example 1, except that cathode slurry was obtained by thoroughly stirring and dispersing 420 mg of carbon black, 0.5 mL of 10% polyvinyl pyridine, 2.3 mL of 2-propanol, and 0.5 mL of water.

(Comparative example 2) A fuel cell was prepared and evaluated in the same manner as in Example 1, except that cathode slurry was obtained by thoroughly stirring and dispersing 420 mg of carbon black, 0.25 mL of 20% Nafion (registered trademark) dispersion, 2.55 mL of 2-propanol, and 0.5 mL of water.

At the time of evaluation, the BO-3 solution did not permeate the fuel cell of Comparative example 2 well. Consequently, electric currents did not flow in the fuel cell, and thus the fuel cell could not be evaluated.

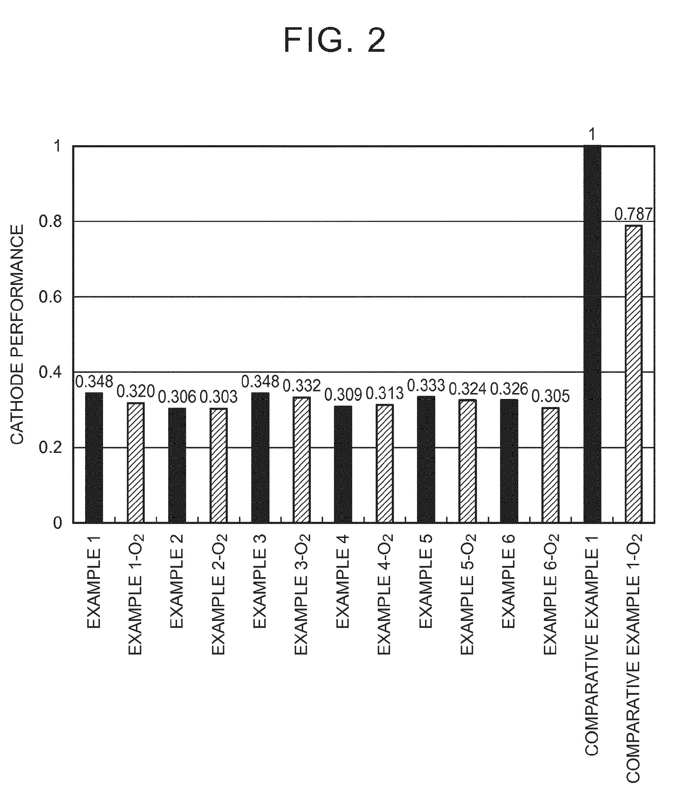

FIG. 2 shows the evaluation results of the fuel cells of Examples 1 to 6 and Comparative example 1. In FIG. 2, "cathode performance" is a value calculated by regarding a value, which was obtained by dividing the voltage drop of the cathode by a value of an electric current (voltage drop of the cathode/the value of an electric current), of the fuel cell of Comparative example 1 as 1. The smaller the value, the better the cathode performance. Furthermore, the data represented by "ooo-O₂" shows the measurement result obtained under the oxygen condition, and data other than these shows the measurement result obtained under the atmospheric condition. As is evident from FIG. 2, in the fuel cell of Comparative example 1, the reaction in the cathode is rate-controlled by the oxygen supply to the cathode. In contrast, in all of the fuel cells of Examples 1 to 6, the cathode demonstrated excellent performance under both the atmospheric condition and the oxygen condition, unlike the fuel cell of Comparative example 1.

## Claims

1. A cathode for a fuel cell, **characterized by** comprising, as a binder, a copolymer of a hydrophilic monomer and at least one of a silicone-containing monomer and a silicone-containing macromonomer.

2. The cathode for a fuel cell according to claim 1, wherein
the silicone-containing monomer is at least one kind selected from silicone-containing alkyl (meth)acrylate, a silicone-containing styrene derivative, and a silicone-containing fumaric acid diester.

3. The cathode for a fuel cell according to claim 2, wherein
the silicone-containing monomer is the silicone-containing alkyl (meth)acrylate.

4. The cathode for a fuel cell according to any one of claims 1 to 3, wherein
the silicone-containing macromonomer is at least one kind selected from compounds having an ethylene-type unsaturated group and a polydimethylsiloxane structure.

5. The cathode for a fuel cell according to any one of claims 1 to 4, wherein
the hydrophilic monomer is at least one kind selected from a pyrrolidone derivative having a vinyl group or a methylene group as a polymerizable group, alkyl (meth)acrylamide, hydroxyalkyl (meth)acrylate, (alkyl)aminoalkyl (meth)acrylate, and polyglycol mono(meth)acrylate.

6. The cathode for a fuel cell according to claim 5, wherein
the hydrophilic monomer is the pyrrolidone derivative having the vinyl group or the methylene group as the polymerizable group or the alkyl (meth)acrylamide.

7. The cathode for a fuel cell according to any one of claims 1 to 6, wherein carbon is used as a conductive substrate of the cathode.

8. The cathode for a fuel cell according to any one of claims 1 to 7, wherein an enzyme is used as a catalyst of the cathode.
